# EUROPEAN PATENT SPECIFICATION

(11) **EP 3 689 929 B1**
(45) Date of publication and mention of the grant of the patent: **28.06.2023**
(21) Application number: 19154997.1
(22) Date of filing: 01.02.2019
(51) Int. Cl.: C08G 18/10, C09J 175/04, C08L 91/06, C08G 18/36

(54) **ADHESIVE COMPOSITION COMPRISING A THIXOTROPIC AGENT**
HAFTZUSAMMENSETZUNG MIT EINEM THIXOTROPIERMITTEL
COMPOSITION ADHÉSIVE COMPRENANT UN AGENT THIXOTROPIQUE

(43) Date of publication of application: 05.08.2020
(73) Proprietor: Henkel AG & Co. KGaA, 40589 Düsseldorf (DE)
(72) Inventor: Kim, Ungtae, 14068 Anyang city (KR); Kim, Mansuk, 13835 Gwacheon-si (KR)

(56) References cited:
- CN-A- 107 555 894
- KR-A- 19980 061 685
- US-A1- 2016 298 009
- US-B2- 9 808 765

## Description

The present invention refers to an adhesive composition comprising a thixotropic agent, a polyurethane adhesive obtained from the adhesive composition as well as to the thixotropic agent comprised in the adhesive composition.

Adhesive compositions on the basis of polyurethanes are well-established and are employed in a variety of applications. Due to the vast variety of applications, polyurethane adhesives have to meet a number of different requirements, in particular with regard to application procedures. On the one hand, the polyurethane adhesive has to have a viscosity which allows for easy and fast application, in particular in industrial processes. On the other hand, the polyurethane adhesive, once applied to a given surface, should not spread unnecessarily in order to avoid a poor bonding performance. Further, the adhesive composition should be stable and easy to handle over a long period of time.

One way to achieve an optimum balance between the different requirements is the use of thixotropic agents in the adhesive composition which help to control the time-dependent shear thinning properties of the adhesive composition. In the presence of a thixotropic agent, certain gels or fluids which are thick or highly viscous will become thin and flowable when shaken, agitated, sheared or otherwise stressed. Once the stress is released, the gel or fluid will return to its more viscous state. Although the concept of introducing thixotropic agents into adhesive compositions has been known in the prior art, identifying suitable thixotropic agents which are compatible with polyurethane adhesive compositions and which do not affect the adhesive properties remains a challenge.

One commonly used thixotropic agent is fumed silica. Although well-known to the person skilled in the art, its use is accompanied by a number of disadvantages, one of them being a prolonged degassing process to remove any bubbles that occur during application of the adhesive composition due to the uneven surface of the silica. Therefore, there still exists the need for suitable alternative thixotropic agents for the employment in adhesive compositions, in particular adhesive compositions on the basis of polyurethanes.

US 2016/0298009 discloses an adhesive composition comprising a first part comprising an isocyanate group-containing prepolymer comprising a reaction product of a first isocyanate and at least one polyol, and a second isocyanate that is essentially unreacted with the first isocyanate, the at least one polyol and the isocyanate group-containing prepolymer; and a second part comprising at least two polyols, the adhesive composition being essentially free of diluent oils and solvents.

US 3,718,614 refers to a process for the formation of silica containing thixotropic compositions having a viscosity control additive of poly(vinyl ethyl ether), the polymer having an average molecular weight in the range of from 1.0×10³ to 5.0×10⁶. The process for the formation includes the steps of suspending silica in a solvent of dibutly phthalate, 3-methyl-3-pentanol or mixtures thereof with high shear stirring; forming a polymeric viscosity control composition by dissolving about 1 to about 20 parts by volume of the viscosity control additive in the solvent and combining the thixotropic component and the viscosity control additive with the organic liquid to be contained and mixing to form the thixotropic composition.

US 4,267,044 relates to thixotropic polyurethane compositions particularly useful as sealants for the edges of folded membrane separatory devices which comprise a prepolymer comprising the reaction product of a polyol having a hydroxyl functionality of at least 2 with one mole per hydroxyl group of said polyol of an organic diisocyanate; and a cross linking agent comprising a polyether polyol having a hydroxyl functionality of at least 2 and primary amine-terminated polyether having an amine functionality of at least 2.

EP 0282016 describes a thixotropic additive based on crystalline calcium silicates which consists of fluffy particles of needle-like calcium silicate crystals having a particle size of 0.5 to 50 microns.

Korean patent application KR19980061685 A discloses an adhesive composition comprising an isocyanate-functional prepolymer and a thixotropic agent such as a hydrogenated castor wax or an amide wax.

Chinese patent application CN107555894 A discloses a cementitious adhesive composition comprising a polymeric binder such as a polyacrylate and a polyvinyl alcohol, and a mixture of a hydrogenated castor wax and an amide wax as thixotropic agents.

In light of the above, it is the object of the present invention to provide an adhesive composition, suitable in particular for the manufacturing of separatory devices, especially water filter membranes, which possesses the required properties to penetrate the employed membranes but on the other hand can be applied precisely to the desired area without unnecessary spreading.

It was surprisingly found that said object is solved by an adhesive composition which comprises a thixotropic agent comprising hydrogenated castor wax and at least one amide wax.

A first object of the present invention is thus an adhesive composition comprising a component A and a component B, the component A comprising at least one polyol and a thixotropic agent; and the component B comprising at least one NCO-terminated compound, wherein the thixotropic agent comprises hydrogenated castor wax and at least one amide wax.

It was surprisingly found that the inventive composition allows the shortening of the manufacturing process since the degassing step can be shorten considerably in comparison to adhesive compositions comprising silica. It was further surprisingly found that the hydrogenated castor wax and the amide wax show a good compatibility with the polyol and can be easily dispersed therein.

In order to make the inventive adhesive compositions especially useful for the manufacturing of water filter membranes, it was found to be advantageous if the ratio of the polyol and the thixotropic agent in component A were kept within a certain range. In a preferred embodiment, the weight ratio of the at least one polyol to the thixotropic agent is therefore 80:20 to 99:1, preferably 90:10 to 96:4.

As mentioned above, the use of silica in adhesive compositions is associated with a number of drawbacks, in particular when it comes to the application of the adhesive composition. In a preferred embodiment, the adhesive composition according to the invention and/or the thixotropic agent comprised therein are therefore essentially free of silica.

In course of the present invention, "essentially free" is to understood as referring to an amount of a given substance in the composition which is less than 1 wt.-%, preferably less than 0.5 wt.-%, in particular less than 0.1 wt.-%, based on the total weight of the respective composition.

The inventive adhesive composition comprises at least one NCO-terminated compound B which reacts with the polyol present in the composition to form a polyurethane adhesive. There are no special requirements with regard to the NCO-terminated compound B. Rather, the NCO-terminated compound may be chosen according to need and desired application. Nevertheless, in a preferred embodiment, the NCO-terminated compound B is preferably selected from the group consisting of 1,4-tetramethylene diisocyanate, 1,6-hexamethylene diisocyanate, 2,2,4-trimethyl-1,6-hexamethylene diisocyanate, 1,12-dodecamethylene diisocyanate, cyclohexane-1,3-diisocyanate and cyclohexane-1,4-diisocyanate, 1-isocyanato-2-isocyanatomethyl cyclopentane, 1-isocyanato-3-isocyanatomethyl-3,5,5-trimethyl-cyclohexane, 4,4'-dicyclohexylmethane diisocyanate, 2,4'-dicyclohexylmethane diisocyanate, 1,3-bis(cyclohexyl) diisocyanate, 1,4-bis-(isocyanatomethyl)-cyclohexane, bis(4-isocyanato-3-methyl-cyclohexyl)methane, 1-isocyanato-1-methyl-4(3)-isocyanatomethyl cyclohexane, alpha,alpha,alpha',alpha'-tetramethyl-1,3-xylylene diisocyanate, alpha,alpha,alpha',alpha'-tetramethyl-1,4-xylylene diisocyanate, 2,4-hexahydrotoluene diisocyanate, 2,6-hexahydrotoluene diisocyanate, 1,3-phenylene diisocyanate, 1,4-phenylene diisocyanate, 2,4-toluene diisocyanate, 2,6-toluene diisocyanate, 2,4-diphenylmethane diisocyanate, 1,5-diisocyanato naphthalene, 4,4'-diphenylmethane diisocyanate, a chemical modification of at least one of the foregoing isocyanates, a prepolymer derived from reaction of at least one of the foregoing isocyanates with a diol or a diamine, or combinations comprising at least one of the foregoing isocyanates.

The amide wax present in the thixotropic agent comprised in the inventive adhesive composition may be any wax which shows a good compatibility with the other components of the inventive adhesive composition. Preferably the at least one amide wax is derived from a reaction of a fatty acid with amines and/or diamines. The fatty acid is preferably selected from the group consisting of saturated and unsaturated fatty acids, preferably those having an unbranched chain of an even number of carbons, in particular from 4 to 28 carbons. In a further preferred embodiment, the fatty acid is chosen from the group consisting of caprylic acid, caric acid, lauric acid, myristic acid, palmitic acid, stearic acid, arachidic acid, behenic acid, lignoceric acid, cerotic acid, myristoleic acid, palmitoleic acid, sapienic acid, oleic acid, elaidic acid, vaccenic acid, linoleic acid, linoelaidic acid, α-linolenic acid and mixtures thereof.

The polyol comprised in the adhesive composition may also be chosen according to the desired application. Preferably, the at least one polyol shows a good compatibility with the thixotropic agent. Therefore, in a preferred embodiment, the at least one polyol is preferably based on a triglyceride, preferably having a carbon chain comprising 4 to 26, more preferably 12 to 22 carbon atoms. In an especially preferred embodiment, the at least one polyol is selected from the group of vegetable oils containing free hydroxyl groups. In an especially preferred embodiment, the at least one polyol is castor oil.

In a preferred embodiment of the present invention, the at least one polyol is present in the adhesive composition in an amount of 60 to 99 wt.-%, preferably 85 to 98 wt.-%, based in the total weight of component A.

It was surprisingly found that good stability and proper flowability of the adhesive composition were achieved if the thixotropic agent contained both, hydrogenated castor wax and amide wax. In a preferred embodiment, the adhesive composition comprises hydrogenated castor wax in an amount of 1 to 10 wt.-%, preferably 1 to 5 wt.-%, based on the total weight of component A. Further preferred is an embodiment of the present invention wherein the at least one amide wax is present in an amount of 1 to 10 wt.-%, preferably 1 to 5 wt.-%, based on the total weight of component A.

The properties of the adhesive composition, in particular with respect to viscosity, may be adjusted by the ratio of hydrogenated castor wax and amide wax in the thixotropic agent. In a preferred embodiment, hydrogenated castor wax and the at least one amide wax are employed in a weight ratio of 4:1 to 1:4, preferably 3:1 to 1:3.

The hydrogenated castor wax employed in the present invention may be obtained by any conventional methods known to the person skilled in the art. In a preferred embodiment, the hydrogenated castor wax is obtained by hydrogenation of castor oil in the presence of a Nickel catalyst.

The properties of the adhesive composition according to the invention, in particular with regard to application time and open time, can be adjusted by adjusting the ratio of polyol to NCO-terminated compound in the adhesive composition, expressed as NCO/OH ratio. It was found that the best results, in particular with regard to the manufacturing of water filter membranes, were obtained when the ratio of NCO to OH did not exceed 1.5. In a preferred embodiment, the NCO/OH ratio is therefore 0.7 to 1.4, preferably 0.9 to 1.1.

A further object of the present invention is a polyurethane adhesive obtained by mixing the first component A and the second component B of an adhesive composition according to the invention, preferably in a 1 to 0.8, in particular 1 to 0.95 weight ratio of component A to component B, to form a mixture and curing the mixture. The polyurethane adhesive may be employed as a one-component (1K) system or a two-component (2K) system. In a preferred embodiment, the polyurethane adhesive is therefore a one-component system or a two-component system, in particular a two-component system.

A further object of the present invention is an article comprising the inventive polyurethane adhesive. The inventive polyurethane adhesive is especially suitable for the production of separatory devices, in particular filter systems. The inventive article therefore preferably comprises a semipermeable membrane, wherein the polyurethane adhesive adheres to the semipermeable membrane. Preferably, the article is a water filter.

A further object of the present invention is the use of an adhesive composition according to the invention for the production of separatory devices such as filters, in particular spiral wound filters.

A still further object of the present invention is the use of an adhesive composition according to the invention or the use of a polyurethane adhesive according to the invention or the use of an article according to the invention in water filtration systems.

The present invention will be explained in more detail based on the following examples

### Examples:

### Component A was prepared as follows:

The polyol was heated to a temperature of 75 to 85 °C and stirred for one hour before the thixotropic agent was added. In case of inventive example 1 a mixture of hydrogenated castor wax and amide wax in a weight ratio of 1:1 was used as thixotropic agent. In case of inventive example 2, the weight ratio of hydrogenated castor wax and amide wax was 3:1. The properties are summarized in Table 1.

**Table 1**

| | Comp.-1 | Comp.-2 | Comp.-3 | Ex 1 | Ex 2 |
|---|---|---|---|---|---|
| Polyol [wt.-%] | 95 | 95 | 95 | 96 | 96 |
| TA* [wt.-%] | 5 | 5 | 5 | 4 | 4 |
| Type TA | fumed silica | amide wax | hydrogenated castor wax | 1:1 | 3:1 |
| viscosity¹⁾ | 18000 | 5200 | 3500 | 18500 | 22000 |
| TI²⁾ | 4.8 | 2.7 | 3.1 | 4.0 | 4.6 |

| | | | | | |
|---|---|---|---|---|---|
| *) Thixotropic agent 1) Viscosity given in cps measured at 25 °C according to ASTM D1084 using a Brookfield viscosimeter 2) Thixotropic index measured according to standard procedure. | | | | | |

As can be seen, a thixotropic agent employing a mixture of hydrogenated castor wax and amide wax affords rheology properties which are comparable to those of fumed silica. However, in contrast to the composition according to comparative example 1 (Comp.-1) which took about 5 hours to degas, degassing was completed after one hour in case of inventive examples 1 and 2 (Ex.-1 and Ex.-2).

The composition according to Example 2 was reacted with an NCO-terminated compound on the basis of the prepolymer in a mixing ratio of 1:1 (Ex. 4). As a comparison, a commercially available polyurethane adhesive was used (Comp.-4). The properties of both adhesive are summarized in Table 2.

**Table 2:**

| | Ex. 4 | Comp.-4 |
|---|---|---|
| Viscosity [cps] | 20000 | 17000 |
| TI | 4.0 | 2.0 |
| spreading | < 40% | > 60% |

As can be seen, the adhesive according to the invention showed favorable spreading properties. While in case of the inventive adhesive, spreading of the adhesive after application was less than 40%, in case of the commercially available adhesive a spreading of 60% was observed. It was further found that the adhesive according to the invention showed a much better penetration behavior than the comparative adhesive, making the inventive adhesive especially suitable for the production of filter systems.

## Claims

1. Adhesive composition comprising a component A and a component B wherein Component A comprises at least one polyol and a thixotropic agent; and Component B comprises at least one NCO-terminated compound, **characterized in that** the thixotropic agent comprises a hydrogenated castor wax and at least one amide wax.

2. Adhesive composition according to claim 1, **characterized in that** the adhesive composition and/or the thixotropic agent is essentially free of silica.

3. Adhesive composition according to any of the forgoing claims, **characterized in that** the at least one amide wax is derived from reaction of a fatty acid with amines and/or diamines.

4. Adhesive composition according to any of the forgoing claims, **characterized in that** the at least one polyol is castor oil.

5. Adhesive composition according to any of the forgoing claims, **characterized in that** the at least one polyol is present in an amount of 60 to 99 wt.-%, preferably 85 to 98 wt.-%, based on the total weight of component A.

6. Adhesive composition according to any of the forgoing claims, **characterized in that** the hydrogenated castor wax is present in an amount of 1 to 10 wt.-%, preferably 1 to 5 wt.-%, based on the total weight of component A.

7. Adhesive composition according to any of the forgoing claims, **characterized in that** the at least one amide wax is present in an amount of 1 to 10 wt.-%, preferably 1 to 5 wt.-%, based on the total weight of component A.

8. Adhesive composition according to any of the forgoing claims, **characterized in that** the hydrogenated castor wax and the at least one amide wax are employed in a weight ratio of 4:1 to 1:4, preferably 3:1 to 1:3.

9. A polyurethane adhesive made by mixing component A and component B of the adhesive composition of any of claims 1 to 8, preferably in a 1 to 0.8, in particular 1 to 0.95 weight ratio of component A to component B, to form a mixture, and curing the mixture.

10. An article comprising the polyurethane adhesive of claim 9.

11. The article of claim 10, wherein the article further comprises a semipermeable membrane, wherein the polyurethane adhesive adheres to the semipermeable membrane.

12. Use of an adhesive composition according to any of claims 1 to 8 in the production of filters, in particular spiral would filters.

13. Use of an adhesive composition according to any of claims 1 to 8 in water filtration.

## Patentansprüche

1. Klebstoffzusammensetzung, umfassend eine Komponente A und eine Komponente B, wobei Komponente A mindestens ein Polyol und ein Thixotropiermittel umfasst; und Komponente B mindestens eine NCO-terminierte Verbindung umfasst, **dadurch gekennzeichnet, dass** das Thixotropiermittel ein hydriertes Rizinuswachs und mindestens ein Amidwachs umfasst.

2. Klebstoffzusammensetzung nach Anspruch 1,
**dadurch gekennzeichnet, dass** die Klebstoffzusammensetzung und/oder das Thixotropiermittel im Wesentlichen frei von Siliziumdioxid ist.

3. Klebstoffzusammensetzung nach einem der vorstehenden Ansprüche, **dadurch gekennzeichnet, dass** das mindestens eine Amidwachs aus der Reaktion einer Fettsäure mit Aminen und/oder Diaminen erlangt wird.

4. Klebstoffzusammensetzung nach einem der vorstehenden Ansprüche, **dadurch gekennzeichnet, dass** das mindestens eine Polyol Rizinusöl ist.

5. Klebstoffzusammensetzung nach einem der vorstehenden Ansprüche, **dadurch gekennzeichnet, dass** das mindestens eine Polyol in einer Menge zu 60 bis 99 Gew.-%, vorzugsweise 85 bis 98 Gew.-%, bezogen auf das Gesamtgewicht der Komponente A, vorhanden ist.

6. Klebstoffzusammensetzung nach einem der vorstehenden Ansprüche, **dadurch gekennzeichnet, dass** das hydrierte Rizinusöl in einer Menge zu 1 bis 10 Gew.-%, vorzugsweise 1 bis 5 Gew.-%, bezogen auf das Gesamtgewicht der Komponente A, vorhanden ist.

7. Klebstoffzusammensetzung nach einem der vorstehenden Ansprüche, **dadurch gekennzeichnet, dass** das mindestens eine Amidwachs in einer Menge zu 1 bis 10 Gew.-%, vorzugsweise 1 bis 5 Gew.-%, bezogen auf das Gesamtgewicht der Komponente A, vorhanden ist.

8. Klebstoffzusammensetzung nach einem der vorstehenden Ansprüche, **dadurch gekennzeichnet, dass** das hydrierte Rizinusöl und das mindestens eine Amidwachs in einem Gewichtsverhältnis von 4:1 bis 1:4, vorzugsweise 3:1 bis 1:3, eingesetzt werden.

9. Ein Polyurethanklebstoff, der durch Mischen von Komponente A und Komponente B der Klebstoffzusammensetzung nach einem der Ansprüche 1 bis 8, vorzugsweise in einem 1 bis 0,8, insbesondere 1 bis 0,95 Gewichtsverhältnis von Komponente A zu Komponente B hergestellt wird, um eine Mischung auszubilden und Härten der Mischung.

10. Erzeugnis, umfassend den Polyurethanklebstoff nach Anspruch 9.

11. Erzeugnis nach Anspruch 10, wobei das Erzeugnis ferner eine semipermeable Membran umfasst, wobei der Polyurethanklebstoff an der semipermeablen Membran klebt.

12. Verwendung einer Klebstoffzusammensetzung nach einem der Ansprüche 1 bis 8 bei der Produktion von Filtern, insbesondere von Spiralfiltern.

13. Verwendung einer Klebstoffzusammensetzung nach einem der Ansprüche 1 bis 8 in der Wasserfiltration.

## Revendications

1. Composition adhésive comprenant un composant A et un composant B, le composant A comprenant au moins un polyol et un agent thixotropique ; et le composant B comprenant au moins un composé à terminaison NCO,
**caractérisée en ce que** l'agent thixotropique comprend une cire de ricin hydrogénée et au moins une cire amide.

2. Composition adhésive selon la revendication 1, **caractérisée en ce que** la composition adhésive et/ou l'agent thixotropique sont sensiblement dépourvus de silice.

3. Composition adhésive selon l'une quelconque des revendications précédentes, **caractérisée en ce que** l'au moins une cire amide est dérivée d'une réaction d'un acide gras avec des amines et/ou diamines.

4. Composition adhésive selon l'une quelconque des revendications précédentes, **caractérisée en ce que** l'au moins un polyol est de l'huile de ricin.

5. Composition adhésive selon l'une quelconque des revendications précédentes, **caractérisée en ce que** l'au moins un polyol est présent en une quantité de 60 à 99 % en poids, de préférence 85 à 98 % en poids, en fonction du poids total de composant A.

6. Composition adhésive selon l'une quelconque des revendications précédentes, **caractérisée en ce que** la cire de ricin hydrogénée est présente en une quantité de 1 à 10 % en poids, de préférence 1 à 5 % en poids, en fonction du poids total de composant A.

7. Composition adhésive selon l'une quelconque des revendications précédentes, **caractérisée en ce que** l'au moins une cire amide est présente en une quantité de 1 à 10 % en poids, de préférence 1 à 5 % en poids, en fonction du poids total de composant A.

8. Composition adhésive selon l'une quelconque des revendications précédentes, **caractérisée en ce que** la cire de ricin hydrogénée et l'au moins une cire amide sont employées dans un rapport pondéral de 4:1 à 1:4, de préférence 3:1 à 1:3.

9. Adhésif de polyuréthane fabriqué en mélangeant un composant A et un composant B de la composition adhésive selon l'une quelconque des revendications 1 à 8, de préférence dans un rapport pondéral de 1 à 0,8, en particulier 1 à 0,95 du composant A au composant B, pour former un mélange, et le durcissement du mélange.

10. Article comprenant l'adhésif de polyuréthane selon la revendication 9.

11. Article selon la revendication 10, l'article comprenant en outre une membrane semi-perméable, l'adhésif de polyuréthane adhérant à la membrane semi-perméable.

12. Utilisation d'une composition adhésive selon l'une quelconque des revendications 1 à 8 dans la production de filtres, en particulier des filtres enroulés en spirale.

13. Utilisation d'une composition adhésive selon l'une quelconque des revendications 1 à 8 dans une filtration d'eau.
